# EUROPEAN PATENT APPLICATION

(11) **EP 2 768 120 A1**
(43) Date of publication of application: **20.08.2014**
(21) Application number: 13155526.0
(22) Date of filing: 15.02.2013
(51) Int. Cl.: H02K 3/22, H02K 3/24, H02K 9/12

(54) **Rotor of an electric machine**

(71) Applicant: Alstom Technology Ltd, 5400 Baden (CH)
(72) Inventor: Srinivasan, Satish, 5242 Birr (CH); Moonjanattu, Binu Mathew, 5242 Birr (CH)

(57) **Abstract**

The rotor (10) of an electric machine comprises a rotor body ((11), axial slots (14) in the rotor body (11), a plurality of tubular conductive bars (17) in each axial slot (14), apertures (20) in at least some of the tubular conductive bars (17). The apertures (20) are provided on walls of tubular conductive bars (17) that intersect a radial axis (21) of the rotor body (11). The rotor (10) includes tubular elements (25) that are housed in at least some of the holes (20) and pass through at least one tubular conductive bar (17).

## Description

### TECHNICAL FIELD

The present disclosure relates to a rotor of an electric machine.

The electric machine is a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

Rotors of electric machines have a cylindrical body with axial slots. A plurality of conductive bars are housed in the slots; these conductive bars are connected together to define windings.

In order to cool the conductive bars and the rotor, the bars can have a tubular shape, with inlet apertures usually at the end winding part thereof to allow cooling gas to enter the conductive bars. In addition, outlet apertures are provided over the conductive bar length, to allow the cooling gas passing through the conductive bars to move out from the conductive bars.

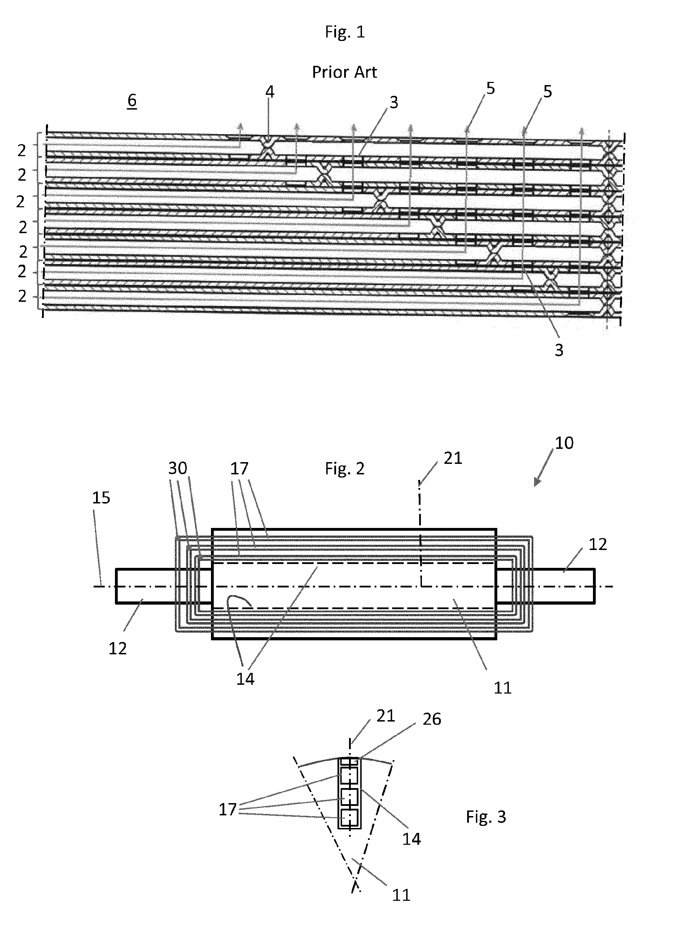

Figure 1 shows an example of conductive bars 2 with the outlet apertures 3; in addition, figure 1 also shows obstructions 4 that are provided adjacent to the outlet apertures 3. The obstructions 4 are usually defined by deformations at opposite sides of each conductive bar 2.

During operation, the flow passing through each conductive bar 2 passes through the outlet apertures 3 as indicated by the arrows 5 and moves out of the conductive bars 2. The flow 5 enters the air gap 6 between the stator and rotor.

While passing through the different conductive bars 2 (i.e. while radially moving through different conductive bars) the flow undergoes expansion and contraction; this results in high pressure drop, low cooling gas velocity and, since the heat transfer coefficient is a function of the Reynold's number (for example through the Dittus-Boelter correlation), it also implies low heat transfer.

### SUMMARY

An aspect of the disclosure includes providing a rotor in which the gas passing through the conductive bars housed in the rotor's slots has low pressure drop and high velocity.

A further aspect of the present disclosure is to provide a rotor that allows a high heat transfer for the cooling gas passing through the tubular conductive bars housed in the rotor's slots.

These and further aspects are attained by providing a rotor in accordance with the accompanying claims.

### BRIEF DESCRIPTION OF THE DRAWINGS

Further characteristics and advantages will be more apparent from the description of a preferred but non-exclusive embodiment of the rotor illustrated by way of non-limiting example in the accompanying drawings, in which:
Figure 1 is a schematic longitudinal section of conductive bars housed in a rotor slot according to the prior art;
Figure 2 is a schematic view of a rotor;
Figure 3 is a schematic cross section of a portion of the rotor;
Figure 4 is a schematic longitudinal section of a part of the rotor in a first embodiment of the disclosure;
Figure 5 is a schematic longitudinal section of a part of the rotor in a second embodiment of the disclosure;
Figure 6 is an enlarged longitudinal section showing details of the embodiment of figure 5;
Figure 7 is another enlarged longitudinal section showing an embodiment similar to the embodiment of figure 6;
Figure 8 is a schematic longitudinal section of a part of the rotor;
Figures 9 and 10 show an embodiment of a tubular element; and
Figures 11 and 12 show another embodiment of a tubular element.

### DETAILED DESCRIPTION OF EXEMPLARY EMBODIMENTS

Figure 2 shows a rotor 10 of an electric machine. The rotor 10 has a rotor body 11 and shafts 12 extending from its opposite ends.

The rotor 10 has slots 14 that extend axially (i.e. parallel to the rotor longitudinal axis 15). Each slot 14 houses a plurality of tubular conductive bars 17 with typically a rectangular or square cross section, other cross sections are anyhow possible; the attached figures 2 and 3 show three bars for each slot 14, it is anyhow clear that any number of bars 17 can be housed in each slot according to the needs and the requirements, as shown for example at the other figures.

The tubular conductive bars 17 have apertures 20 to allow the passage of a cooling gas through them.

The apertures 20 are preferably provided on walls of tubular conductive bars 17 that intersect radial axes 21 of the rotor body 11.

Advantageously, the rotor includes tubular elements 25 that are housed in one or more tubular conductive bars 17 (i.e. the tubular elements 25 pass though one or more tubular conductive bars 17); in addition, the tubular elements 25 are connected (hydraulically connected to allow passage of a cooling gas) to at least two (typically only two) apertures 20 of the tubular conductive bar 17 (this connection is an hydraulic connection, such that the fluid that passes through an aperture also passes through the tubular element 25; in other words the apertures can define the inlet and outlet for the fluid moving through the tubular element 25).

Typically, the tubular elements 25 are housed (i.e. inserted, for example fixed) in one or two apertures 20.

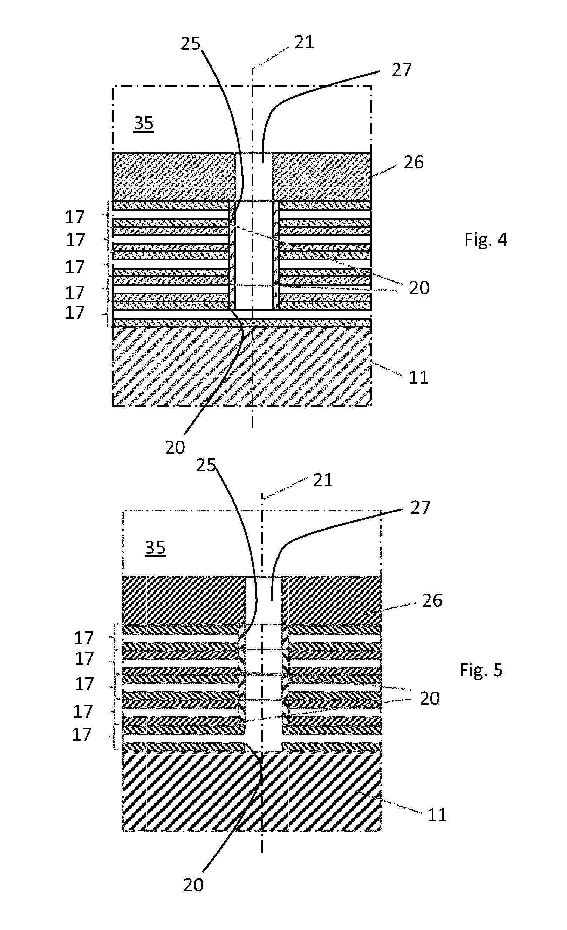

Figure 4 shows a first example in which tubular elements 25 that pass through a plurality of conductive bars 17 are provided. In this example the tubular elements 25 are either made of an insulating material (for example a composite material with resin and glass fibres or other fibres) or a conductive material such as a copper tube covered with an insulating material (for example a mica tape).

Figures 5 shows a preferred example in which each tubular element 25 passes through only one conductive bar 17 (i.e. in the apertures 20 of each conductive bar 17 one tubular element 25 is provided). In this example insulation is provided between adjacent tubular elements 25 (typically radially adjacent tubular elements 25).

In this embodiment the tubular elements 25 are made of a thermally conductive material such as copper, other material are anyhow possible such as aluminium. This embodiment is preferred because it helps heat transfer.

Different ways for providing the insulation between the tubular elements 25 are possible.

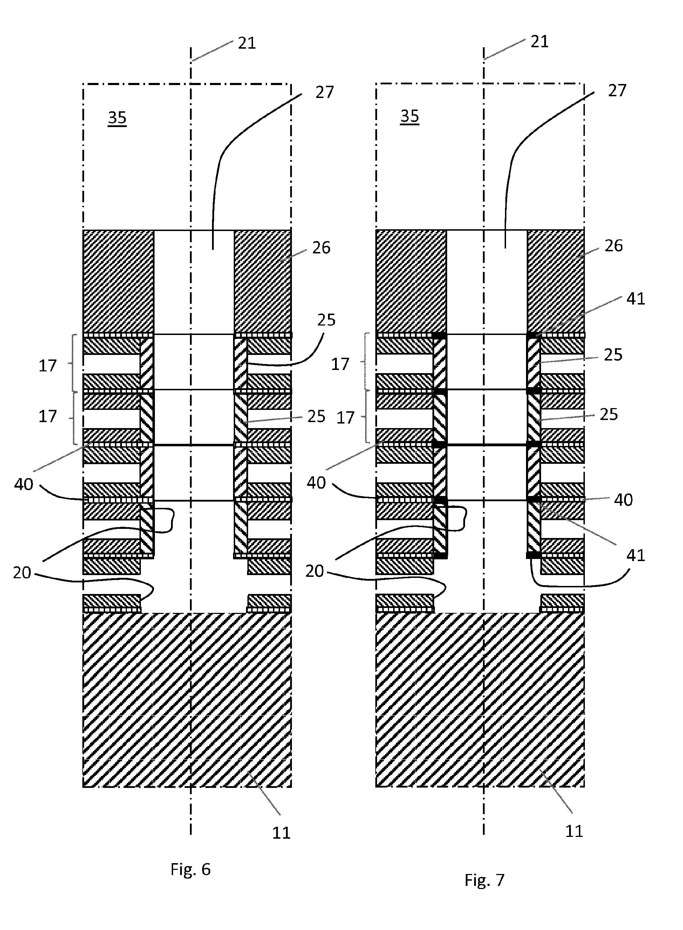

In a first example (figure 6) between the conductive bars 17 insulation 40 is provided (the insulation 40 is usually provided between adjacent conductive bars 17). The insulation 40 extends between the tubular elements 25, to prevent short circuits.

In a second example (figure 7), addition or as an alternative to the insulation 40 between the tubular elements 25, insulating inserts 41 are provided between the tubular elements 25.

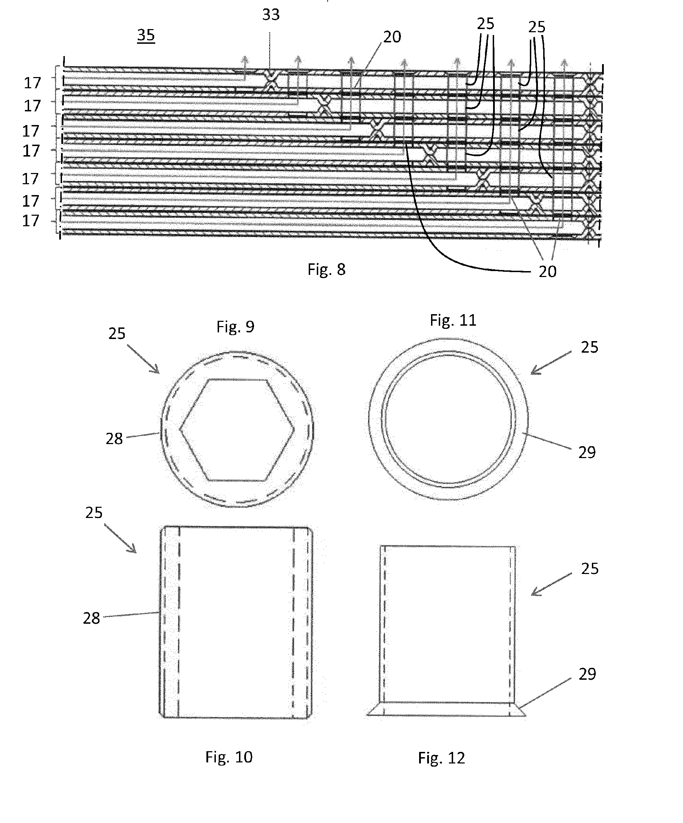

Figure 8 indicates with the reference 25 the tubular elements (according to either the first or second embodiment) that are housed in the apertures 20 of the conductive bars 17.

Preferably, the apertures 20 are aligned along radial axes of the rotor body 11 (for example the axis 21 and also other radial axes typically over the circumference of the rotor) and the tubular elements 25 extend radially with respect to the rotor body 11.

Each axial slot 14 has an axial wedge 26 that closes the slot 14 and withholds the tubular conductive bars 17 in the slot 14; in this case also the wedges 26 have apertures 27.

The apertures 27 of the wedges 26 can have different shapes; for example these apertures 27 can be cylindrical (as shown in the attached figures) or can be flared, usually with larger dimension facing the outside of the rotor body 11. The apertures 27 of the wedges 26 are aligned with the apertures 20 of the conductive bars 17, for example along the radial axes 21.

The tubular elements 25 can be inserted into one or more conductive bars 17. The following examples of tubular elements 25 can be used in embodiments in which the elements 25 that pass through one conductive bar 17 or more than one conductive bar 17.

In a first example (figures 9 and 10), the outer surface of the tubular elements 25 can be at least partially threaded at 28, the threaded part being inserted into one or two apertures 20.

In a second example (figures 11 and 12), the tubular elements 25 can be fit connected into the apertures 20. In this case an externally protruding border 29 can be provided at an end of the tubular element 25; this protruding border 29 can make interference with the apertures 20 (in particular with the border of the aperture 20); in addition the apertures 20 can be flared to help to house the protruding border 29.

In addition, apertures 30 are provided at the end winding part of the conductive bars 17 (i.e. at the part of the bars 17 that is not housed in the slots 14. The apertures 30 allow cooling gas entrance into the tubular conductive bars 17.

The tubular conductive bars 17 have obstructions 33 typically, adjacent to the apertures 20, to prevent cooling gas flow and direct the cooling gas through the apertures 20.

These obstructions 33 are realised by deformation of the cooling bars walls.

The material of the tubular elements 25 can be any appropriate material, preferably the material is copper and/or aluminium or their alloys, because they would guarantee large heat transfer. If needed electrical insulation around the tubular elements 25 can be provided. It is clear that other materials can also be used as well.

The operation of the rotor is apparent from that described and illustrated and is substantially the following.

The rotor is housed in a casing that contains a gas; this gas is also used as cooling gas. In addition the rotor 10 is housed in a cylindrical stator, such that a gap (air gap) identified by the reference 35 in the figure is defined between them.

During operation the cooling gas contained in the casing enters the tubular conductive bars 17 through the apertures 30 and passes through the tubular conductive bars 17. While passing through the tubular conductive bars 17 the cooling gas cools down the conductive bars 17 and the rotor 10.

At the apertures 20 the cooling gas enters the tubular elements 25 and moves towards the air gap 35 (thus for example it moves radially).

Since the cooling gas passing through the tubular elements 25 does not undergo expansion and contraction, the pressure drop is reduced and the velocity can be increased. This results in an increase of the heat transfer.

Then the cooling gas moves out of the tubular element 25 and enter the air gap 35.

Then the cooling gas can move through the air gap 35 and/or can enter cooling channels of the stator or can have different paths according to the cooling scheme of the electric machine.

The disclosure also refers to a tubular conductive bars 17 for a rotor of an electric machine (in particular for a rotor winding thereof). The tubular conductive bar has apertures 20 provided on opposite walls thereof. In addition the tubular conductive bar 17 includes at least a tubular element 25 that is at least partly housed in it. The tubular element 25 is connected to at least an aperture 20 of the tubular conductive bar 17 (hydraulically connected such that the cooling gas that passes through the aperture 20 also passes through the tubular element 25).

Naturally the features described may be independently provided from one another.

In practice the materials used and the dimensions can be chosen at will according to requirements and to the state of the art.

### REFERENCE NUMBERS

- 2: conductive bar
- 3: outlet apertures
- 4: obstruction
- 5: flow
- 6: air gap
- 10: rotor
- 11: rotor body
- 12: shaft
- 14: slot
- 15: longitudinal axis
- 17: tubular conductive bars
- 20: apertures
- 21: radial axis
- 25: tubular elements
- 26: wedge
- 27: aperture
- 28: treaded part
- 29: protruding border
- 30: aperture
- 33: obstruction
- 35: air gap
- 40: insulation
- 41: insulating insert

## Claims

1. A rotor (10) of an electric machine comprising a rotor body (11), axial slots (14) in the rotor body (11), a plurality of tubular conductive bars (17) in each axial slot (14), apertures (20) in at least some of the tubular conductive bars (17), the apertures (20) being provided on walls of tubular conductive bars (17) that intersect radial axes (21) of the rotor body (11), the rotor (10) being **characterised by** including at least a tubular element (25) that is housed in at least one tubular conductive bar (17) and is connected to at least two apertures (20) of the tubular conductive bar (17).

2. The rotor (10) of claim 1, **characterised in that** the tubular element (25) is housed in at least one aperture (20).

3. The rotor (10) of claim 1, **characterised in that** at least some apertures (20) are aligned along radial axes of the rotor body (11) and the tubular elements (25) extend radially with respect to the rotor body (11).

4. The rotor (10) according to claim 1, **characterised in that** each tubular element (25) passes through a plurality of conductive bars (17).

5. The rotor (10) according to claim 4, **characterised in that** the tubular elements (25) are either made of an insulating material or a conductive material covered with an insulating material.

6. The rotor (10) according to claim 1, **characterised in that** each tubular element (25) passes through only one conductive bar (17).

7. The rotor (10) according to claim 6, **characterised in that** insulation is provided between adjacent tubular elements (25).

8. The rotor (10) according to claim 7, **characterised in that** the insulation between adjacent tubular elements (25) includes portions of the insulation (40) provided around the tubular conductive bars (17).

9. The rotor (10) according to claim 7, **characterised in that** the insulation between adjacent tubular elements (25) includes insulating inserts (41).

10. The rotor (10) according to claim 6, **characterised in that** the tubular elements (25) are made of a thermally conductive material.

11. The rotor (10) according to claim 2, **characterised in that** the outer surface of at least a tubular element (25) is at least partially threaded (28), the threaded surface being inserted into at least one aperture (20).

12. The rotor (10) according to claim 2, **characterised in that** at least one tubular element (25) is fit connected into at least one aperture (20).

13. The rotor (10) according to claim 12, **characterised in that** the at least one tubular element (25) has an externally protruding border (29), wherein the protruding border (29) makes interference with the apertures (20) of the conductive bars (17).

14. A tubular conductive bars (17) for a rotor of an electric machine, the tubular conductive bar having apertures (20) provided on opposite walls thereof, **characterised by** including at least a tubular element (25) that is at least partly housed in it, the tubular element (25) being connected to at least two apertures (20) of the tubular conductive bar (17).
